# EUROPÄISCHE PATENTANMELDUNG

(11) **EP 4 287 218 A1**
(43) Veröffentlichungstag der Anmeldung: **06.12.2023**
(21) Anmeldenummer: 23172103.6
(22) Anmeldetag: 08.05.2023
(51) Int. Cl.: H01B 13/00, B05D 3/06, B29C 35/10

(54) **STRAHLUNGSVORRICHTUNG ZUR AUSHÄRTUNG VON AUSHÄRTBAREN KLEBEMASSEN BEI DER UMMANTELUNG VON STRANGFÖRMIGEN ELEMENTEN**

(30) Priorität: 31.05.2022 DE 102022113677
(71) Anmelder: tesa SE, 22848 Norderstedt (DE)
(72) Erfinder: WIENZEK, Tristan, 22848 Norderstedt (DE); AKIN, Deniz Nick, 22848 Norderstedt (DE)
(74) Vertreter: tesa SE

(57) **Zusammenfassung**

Die Erfindung betrifft eine Strahlungsvorrichtung (10) zur Aushärtung von aushärtbaren Klebemassen bei der Ummantelung von strangförmigen Elementen (12), umfassend ein Gehäuse (14) mit einem durch das Gehäuse (14) verlaufenden länglichen Bestrahlungskanal (16), wobei die Strahlungsvorrichtung (10) eine Vielzahl von Strahlungsquellen (18) umfasst, die dazu eingerichtet sind, das Innere des länglichen Bestrahlungskanals (16) mit elektromagnetischer Strahlung zu bestrahlen, wobei das Gehäuse (14) zumindest zwei Gehäuseteile (20a, 20b) umfasst, wobei die Gehäuseteile (20a, 20b) über einen Verbindungsmechanismus (22) beweglich miteinander verbunden sind, wobei der Verbindungsmechanismus (22) dazu eingerichtet ist, ein reversibles und zerstörungsfreies Öffnen und Schließen des Gehäuses (14) durch eine Relativbewegung der Gehäuseteile (20a, 20b) zueinander zu ermöglichen, wobei die Strahlungsvorrichtung (10) dazu eingerichtet ist, dass das geöffnete Gehäuse (14) um ein strangförmiges Element (12) herum angeordnet und um dieses herum geschlossen werden kann, so dass das strangförmige Element (12) im länglichen Bestrahlungskanal (16) angeordnet ist und das Gehäuse (14) das strangförmige Element (12) abschnittsweise in Umfangsrichtung zumindest teilweise umgibt.

## Beschreibung

Die Erfindung betrifft eine Strahlungsvorrichtung zur Aushärtung von aushärtbaren Klebemassen bei der Ummantelung von strangförmigen Elementen und ein entsprechendes Verfahren zur Ummantelung von strangförmigen Elementen, insbesondere von Kabelsträngen bei der Fertigung von Kabelbäumen, unter Einsatz einer entsprechenden Strahlungsvorrichtung sowie ein die Strahlungsvorrichtung umfassendes System zur Durchführung des Verfahrens. Offenbart wird zudem die Verwendung einer entsprechenden Strahlungsvorrichtung bei der Ummantelung von strangförmigen Elementen, insbesondere Kabelbäumen.

Moderne Fahrzeuge umfassen heutzutage eine Vielzahl von elektronischen Geräten, die über eine zumeist komplexe Verkabelung miteinander verbunden werden müssen. Um die hierfür nötigen Kabel im Inneren des Fahrzeuges möglichst platzsparend und sicher anzuordnen sowie zusätzlich einen Schutz gegen mechanische und/oder thermische Beanspruchung bzw. gegen das unerwünschte Eindringen von Feuchtigkeit bereitzustellen, werden zumeist sogenannte Kabelbäume eingesetzt, in denen die Kabel von geeigneten Ummantelungen umgeben sind. In solchen Kabelbäumen werden die geführten Kabelstränge regelmäßig von einem rigiden Kabelkanal ummantelt, der beispielsweise mittels Spritzgießen hergestellt werden kann.

Der übliche Prozess der Herstellung von derart ummantelten Kabelbäumen umfasst dabei neben der Konfektionierung und Zusammenstellung der Kabel zumeist auch eine zumindest vorläufige Verbindung der Kabel sowie die Anordnung des resultierenden Kabelstrangs in einem spritzgegossenen Kanal. Der Aufbau entsprechender Kabelkanäle sowie die Herstellung des ummantelten Kabelbaums wird aus fertigungstechnischer Hinsicht häufig als komplex und anspruchsvoll empfunden, wobei insbesondere regelmäßig ein großer apparativer Aufwand von Nöten ist, beispielsweise, wenn der zur Ummantelung verwendete Kabelkanal mittels Spritzguss hergestellt werden soll. Das aus dem Stand der Technik bekannte Verfahren, wie es beispielsweise in der EP 3763575 A1 oder der US 6969319 A offenbart ist, wird entsprechend zumeist nicht als zeit- und kosteneffizient empfunden, wobei insbesondere der benötigte apparative Aufwand gerade von kleineren Betrieben häufig nicht geleistet werden kann. Zudem erfordert der vergleichsweise komplexe Herstellungsprozess zumeist gut ausgebildete und erfahrene Arbeitskräfte, um Fertigungsfehler zuverlässig vermeiden zu können. Als Nachteil des aus dem Stand der Technik bekannten Verfahrens wird insbesondere gesehen, dass dieses zumeist nur umständlich auf veränderte Makrostrukturen des Kabelbaums, d.h. verschiedene Kabelsatzpläne, wie sie beispielsweise für zwei verschiedene Fahrzeuge benötigt werden, umgestellt werden können, weil beispielsweise separat angepasste Spritzgusswerkzeuge benötigt werden.

Eine vor allem mit Blick auf die Anpassungsmöglichkeit an verschiedene Makrostrukturen vielversprechende Alternative stellt der Einsatz von Klebebändern zum Ummanteln von Kabelsträngen dar, insbesondere da Klebebänder in den herkömmlichen Verfahren häufig ohnehin bereits zur Bündelung der einzelnen Kabel verwendet werden. Zumindest in der Theorie erscheint es deshalb vielversprechend, Kabelbäume durch eine im Wesentlichen vollständige Umwicklung mit Klebebändern auszubilden. Derart mit Klebeband umwickelte Kabelstränge sind jedoch in der Regel flexibel, was insbesondere mit Blick auf eine exakte Einpassung der Kabelbäume in ein Fahrzeug sowie die mechanische Widerstandsfähigkeit der Kabelbäume gegen mechanische Belastung als nachteilig angesehen wird, da entsprechende flexible Kabelbäume im Fahrzeug zusätzlich fixiert werden müssten, damit sie nicht verrutschen.

Zur Lösung dieser Problematik wird vorgeschlagen, dass durch den Einsatz von Klebebändern mit aushärtbaren Klebemassen ein besonders vorteilhaftes Verfahren zur Ummantelung von strangförmigen Elementen, beispielsweise Kabelbäumen, erhalten werden kann. Dieses sieht vor, dass die zu ummantelnden strangförmigen Elemente mit einem Klebeband umwickelt werden, welches eine reaktive Klebemasse umfasst, d. h. eine Klebemasse, welche durch äußere Einflüsse, beispielsweise Strahlung, thermische Energie oder chemische Reaktion mit einem Vernetzer ausgehärtet werden kann und deren dadurch erreichte Festigkeit für einen langen Zeitraum eine chemisch und physikalisch hoch beanspruchbare Verklebung ermöglicht, durch die eine rigide Struktur des ummantelten strangförmigen Elements vorgegeben werden kann. Dieses Verfahren ist in den meisten Fällen deutlich zeit- und kosteneffizienter als die aus dem Stand der Technik bekannten Verfahren, welche beispielsweise einen spritzgegossenen Kabelkanal vorsehen. Zudem ermöglicht es dieses Verfahren in vorteilhafter Weise mit nur geringfügigem apparativen Aufwand leistungsfähige Kabelbäume herzustellen, welche zudem sehr flexibel an unterschiedliche Makrostrukturen, bspw. unterschiedliche Kabelsatzpläne, angepasst werden können, ohne dass weitreichende Änderungen an den verwendeten Vorrichtungen nötig sind.

Durch dieses Konzept wird nicht nur der Gesamtprozess der Herstellung von ummantelten Kabelbäumen vereinfacht, sondern es kann zumeist auch eine Volumenersparnis erreicht werden, sodass der benötigte Bauraum verkleinert werden kann, wenn das reaktive Klebeband selbst den formgebenden Teil des Kabelbaums bildet, welcher vor dem Aushärten in die gewünschte Form gebracht wird. Zudem ist dieses Verfahren gegenüber dem aus dem Stand der Technik bekannten Verfahren regelmäßig mit einer Reduktion des Gesamtgewichts des resultierenden ummantelten Kabelbaums verbunden.

Bei dieser grundsätzlich überaus vorteilhaften Verfahrensführung zur Herstellung von ummantelten Elementen, beispielsweise Kabelbäumen, kommt dem Schritt des Aushärtens eine besondere Bedeutung zu, um das eingesetzte reaktive Klebeband zuverlässig und gleichmäßig auszuhärten. Gleichzeitig soll das Aushärten in einer Form erfolgen, die eine zeit- und kosteneffiziente Fertigung ermöglicht, wobei in vielen Fällen die Herausforderung besteht, dass auch beim Einsatz von strahlungshärtenden Klebebändern für eine optimale Aushärtung ein zusätzliches Konditionieren bei erhöhten Temperaturen wünschenswert ist, um ein optimales Ergebnis zu erzielen.

Bei der Entwicklung des vorstehend beschriebenen Verfahrens wurde erwogen, die Aushärtung mit handgeführten, vergleichsweise einfachen Strahlungsvorrichtungen zu bewirken. Die erhaltenen Resultate waren dabei jedoch nicht vollständig zufriedenstellend. Insbesondere wurde als nachteilig empfunden, dass die Bestrahlung des in Klebeband eingewickelten Stranges über den gesamten Umfang relativ zeitaufwendig ist und das Verfahren zudem anfällig für Schwankungen in der applizierten Strahlungsdosis ist, so dass Inhomogenitäten im ausgehärteten Klebeband entstehen können und die Gefahr von unzureichend ausgehärteten Bereichen besteht. Darüber hinaus war es beim Einsatz von handelsüblichen Strahlungsvorrichtungen nicht ohne weiteres möglich, die an sich wünschenswerte thermische Konditionierung des bestrahlten Stranges in effizienter Weise zu realisieren, so dass in vielen Fällen eine nachgelagerte thermische Behandlung in einer separaten Temperiereinheit nötig war, um den gewünschten Aushärtungsgrad zu realisieren.

Ausgehend von diesen Erkenntnissen zu den handgeführten Strahlungsvorrichtungen hat sich im Zuge der Entwicklung zunächst der Einsatz von sogenannten "Curing-Boxen" durchgesetzt, bei denen es sich um abgeschirmte Box handelt, in deren Inneren die zur Aushärtung der Klebebänder benötigten Strahlungsvorrichtungen sowie optional auch Temperiereinheiten angeordnet sind. Diese Boxen haben dabei den Vorteil, dass sie die Aushärtung unter präzise definierten Strahlungsbedingungen ermöglichen, wobei gleichzeitig die eingesetzten Arbeitskräfte vor elektromagnetischer Strahlung geschützt werden können. Zudem lässt sich in diesen Boxen besonders leicht auch das dem Bestrahlen vor- oder nachgelagerte Temperieren des Stranges umsetzen. Der Einsatz dieser Boxen ist jedoch auch mit Nachteilen verbunden. Die Curing-Boxen sind, zumindest sofern sie dafür eingerichtet sind, größere Teile des Stranges gleichzeitig zu bestrahlen, relativ schwer und benötigen in der Werkshalle relativ viel Platz. Zudem sind diese Curing-Boxen wegen der zumeist statischen Ausrichtung der Strahler im Inneren, insbesondere im Falle von komplexen Stranggeometrien, anfällig für das Auftreten von Schattenwürfen, die lokal zu einer unzureichenden Aushärtung führen können. Darüber hinaus sind diese abgeschirmten Curing-Boxen zumeist nur schwer in Fertigungsstraßen zu integrieren und erfordern es in vielen Fällen, dass die Ausrichtung und das Umwickeln des Stranges mit Klebeband an einem räumlich separierten Ort erfolgen muss, von dem der umwickelte Strang anschließend in die Curing-Box eingebracht wird.

Die Aufgabe der vorliegenden Erfindung war es, die vorstehend beschriebenen Nachteile der zuvor verwendeten Strahlungsvorrichtungen auszuräumen oder zumindest zu verringern.

Insbesondere war es die Aufgabe der vorliegenden Erfindung, eine Strahlungsvorrichtung zur Aushärtung von aushärtbaren Klebemassen bei der Ummantelung von strangförmigen Elementen anzugeben, die bei möglichst niedrigem Gewicht und geringem Platzbedarf eine einfache Handhabung und eine zuverlässige Aushärtung des umwickelten Stranges ermöglicht.

Hierbei war es eine Aufgabe der vorliegenden Erfindung, dass die anzugebende Strahlungsvorrichtung eine möglichst gleichmäßige Strahlungsapplikation ermöglichen sollte und dadurch einen Beitrag zu der Herstellung von ummantelten strangförmigen Elementen in hoher Qualität leisten sollte, die frei von unzureichend ausgehärteten Bereichen sind.

Insoweit war es eine Aufgabe der vorliegenden Erfindung, dass die anzugebende Strahlungsvorrichtung eine besonders zeit- und kosteneffiziente Aushärtung ermöglichen und insbesondere besonders leicht in bestehende Fertigungslinien integrierbar sein sollte, wobei insbesondere auch ein hoher Automatisierungsgrad erreichbar sein sollte.

Zudem war es eine Aufgabe der vorliegenden Erfindung, dass die anzugebende Strahlungsvorrichtung auch für die Bearbeitung komplexer Makrostrukturen des umwickelten Stranges einsetzbar sein sollte, wobei wünschenswerterweise Änderungen in der Auslegung des zu härtenden Stranges keine Änderungen an der anzugebenden Strahlungsvorrichtung erforderlich machen sollten.

Zudem war es eine Aufgabe der vorliegenden Erfindung, dass die anzugebende Strahlungsvorrichtung eine effiziente Temperierung des Stranges ermöglichen und idealerweise die Notwendigkeit für weitere separate Temperiereinheiten ausräumen sollte.

Zudem war es eine Aufgabe der vorliegenden Erfindung, dass die anzugebende Strahlungsvorrichtung bereits nach kurzer Einweisung auch von ungeschulten Arbeitskräften zuverlässig einsetzbar sein sollte und dabei eine hohe Prozesssicherheit und eine reproduzierbare Qualität der Aushärtung gewährleisten sollten. Hierbei war es wünschenswert, dass die anzugebende Strahlungsvorrichtung einen Beitrag zu der Arbeitssicherheit und insbesondere eine zuverlässige Abschirmung der Arbeitskräfte vor der zum Aushärten eingesetzten elektromagnetischen Strahlung leisten sollte.

Darüber hinaus war es eine Aufgabe der vorliegenden Erfindung, dass die anzugebende Strahlungsvorrichtung für eine große Bandbreite an unterschiedlichen aushärtbaren Klebemassen einsetzbar sein sollte, um ohne konstruktive Modifikationen eine große Anzahl von reaktiven Klebebändern aushärten zu können.

Es war eine zusätzliche Aufgabe der vorliegenden Erfindung, für die anzugebende Strahlungsvorrichtung bevorzugte konstruktive Ausgestaltungen zu identifizieren.

Es war eine ergänzende Aufgabe der vorliegenden Erfindung, ein komplementäres Verfahren zur Ummantelung von strangförmigen Elementen mit einer entsprechenden Strahlungsvorrichtung sowie eine bevorzugte Vorrichtung für den Einsatz in diesem Verfahren anzugeben, mit der sich ein besonders hoher Automatisierungsgrad erreichen lässt.

Es war eine sekundäre Aufgabe der vorliegenden Erfindung, auch eine Verwendung einer entsprechenden Strahlungsvorrichtung zur Aushärtung von aushärtbaren Klebemassen bei der Ummantelung von strangförmigen Elementen anzugeben.

Die Erfinder der vorliegenden Erfindung haben nunmehr gefunden, dass sich die vorstehend beschriebenen Aufgaben überraschenderweise lösen lassen, wenn eine Strahlungsvorrichtung bereitgestellt wird, deren Gehäuse aufgeklappt und um einen auszuhärtenden Strang herum geschlossen werden kann, um den Strang im Inneren des Gehäuses in einem Bestrahlungskanal aufzunehmen, in dem der durch den Strahlungskanal verlaufende Strang mit der von einer Vielzahl von Strahlungsquellen erzeugten elektromagnetischen Strahlung bestrahlt werden kann, wie es in den Ansprüchen definiert ist. Das geschlossene Gehäuse kann zur Aushärtung von Teilabschnitten der Ummantelung am Strang entlanggeführt werden, so dass der Strang abschnittsweise durch den Bestrahlungskanal geführt wird, um schrittweise sämtliche Teile der Ummantelung mit der vorgesehenen Strahlungsdosis zu beaufschlagen. Im Falle von Verzweigungen im Strang oder nach Beendigung der Aushärtung kann das Gehäuse geöffnet und die Strahlungsvorrichtung leicht vom Strang gelöst werden.

Auf diese Weise wird eine vorteilhafte Strahlungsvorrichtung erhalten, die sich ausgezeichnet für den Einsatz bei der Aushärtung von aushärtbaren Klebemassen bei der Ummantelung von strangförmigen Elementen eignet, einfach zu handhaben ist und dabei besonders leicht und platzsparen ausgeführt werden kann. Durch diese Möglichkeit einer kompakten Ausführung, die sich eng an den Dimensionen des auszuhärtenden Strangs orientieren kann, ist der Einsatz als Endeffektor eines Industrieroboters und damit die Realisierung eines hohen Automatisierungsgrades möglich. Durch die Umfassung des auszuhärtenden Stranges durch das Gehäuse und die Anordnung in dem Strahlungskanal ist eine besonders gleichmäßige Strahlungsapplikation über den gesamten Umfang möglich, wobei die Umwelt gleichzeitig leicht von der Strahlung abgeschirmt werden kann. Durch die Möglichkeit, die Strahlungsvorrichtung jederzeit vom Strang zu lösen und sie an anderer Stelle wieder aufzusetzen, können auch komplexe Makrostrukturen effizient ausgehärtet werden, wobei der Einsatz der Strahlungsvorrichtung durch die enge Orientierung am Verlauf des umfassten Stranges auch für ungeschulte Arbeitskräfte einen leichten Einsatz ermöglicht. Durch die Umfassung des auszuhärtenden Stranges und die dadurch bedingte räumliche Nähe der Strahlungsquellen zum Strang reicht vorteilhafterweise in vielen Fällen bereits die Abwärme der Strahlungsquellen aus, um eine separate Temperierung überflüssig zu machen, wobei im Inneren des Gehäuses zudem auch besonders einfach Heizelemente zum Temperieren des Bestrahlungskanals vorgesehen werden können.

Die vorstehend genannten Aufgaben werden somit durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Verfahren, Systeme und Verwendungen ergeben sich aus den Merkmalen bevorzugter Strahlungsvorrichtungen.

Die Erfindung betrifft eine Strahlungsvorrichtung zur Aushärtung von aushärtbaren Klebemassen bei der Ummantelung von strangförmigen Elementen, umfassend ein Gehäuse mit einem durch das Gehäuse verlaufenden länglichen Bestrahlungskanal,
wobei die Strahlungsvorrichtung eine Vielzahl von Strahlungsquellen umfasst, die dazu eingerichtet sind, das Innere des länglichen Bestrahlungskanals mit elektromagnetischer Strahlung zu bestrahlen,
wobei das Gehäuse zumindest zwei Gehäuseteile umfasst, wobei die Gehäuseteile über einen Verbindungsmechanismus beweglich miteinander verbunden sind, wobei der Verbindungsmechanismus dazu eingerichtet ist, ein reversibles und zerstörungsfreies Öffnen und Schließen des Gehäuses durch eine Relativbewegung der Gehäuseteile zueinander zu ermöglichen,
wobei die Strahlungsvorrichtung dazu eingerichtet ist, dass das geöffnete Gehäuse um ein strangförmiges Element herum angeordnet und um dieses herum geschlossen werden kann, so dass das strangförmige Element im länglichen Bestrahlungskanal angeordnet ist und das Gehäuse das strangförmige Element abschnittsweise in Umfangsrichtung zumindest teilweise umgibt.

Die erfindungsgemäße Strahlungsvorrichtung ist für den Einsatz in einem Verfahren zur Ummantelung von strangförmigen Elementen geeignet, wie es nachfolgend offenbart wird. Hierfür umfasst die Strahlungsvorrichtung ein Gehäuse, welches bevorzugt aus Metall, beispielsweise Aluminium oder Stahl, oder Kunststoff, beispielsweise Polytetrafluorethylen oder Polyamide wie PA2200, ausgebildet ist. Durch dieses Gehäuse erstreckt sich ein Bestrahlungskanal, der entsprechend über zwei Seitenöffnungen von außen zugänglich ist und entlang seiner Längsrichtung in Umfangsrichtung vom Gehäuse umgeben ist. Der Fachmann versteht insoweit, dass das strangförmige Element, auf das für die vorstehende Definition der Funktionalität Bezug genommen wird, nicht Teil der erfindungsgemäßen Strahlungsvorrichtung ist.

Der Bestrahlungskanal dient dazu, den zu bestrahlenden Strang aufzunehmen, sodass dieser beim Bestrahlen des strangförmigen Elementes abschnittsweise umfasst ist. Hierbei bedeutet der Ausdruck "länglich", dass der Bestrahlungskanal in einer Raumrichtung eine deutlich größere Längenausdehnung aufweist als in der dazu orthogonal stehenden Ebene. Auch wenn es für bestimmte Anwendungen vorteilhaft sein kann, den länglichen Bestrahlungskanal als gekrümmten Bestrahlungskanal auszubilden, beispielsweise als spezialisierte Ausführung zur Aushärtung von Kurvenverläufen im strangförmigen Element, wird es für die weit überwiegende Zahl von Anwendungsfällen bevorzugt sein, den länglichen Bestrahlungskanal im Wesentlichen gerade auszuführen. Bevorzugt ist entsprechend eine erfindungsgemäße Strahlungsvorrichtung, wobei sich der längliche Bestrahlungskanal als gerade Ausnehmung durch das Gehäuse erstreckt.

Der Fachmann versteht, dass hinsichtlich der Länge des Bestrahlungskanals ein Zielkonflikt besteht. Mit längeren Bestrahlungskanälen lassen sich größere Teile des strangförmigen Elementes zur gleichen Zeit aushärten, sodass die Effizienz steigt. Gleichzeitig reduziert sich jedoch auch die Möglichkeit, stark gekrümmte Bereiche des strangförmigen Elementes auszuhärten, da diese Bereiche wegen der Krümmung gegebenenfalls nicht vollständig in den Bestrahlungskanal passen, wenn dieser sehr lang ausgebildet ist. Beispielhaft ist eine erfindungsgemäße Strahlungsvorrichtung, wobei der Bestrahlungskanal eine Länge im Bereich von 10 bis 1000 mm, bevorzugt im Bereich von 50 bis 500 mm, besonders bevorzugt im Bereich von 100 bis 200 mm, aufweist.

Mit Blick auf die Querschnittsform und den Durchmesser des Bestrahlungskanals ist es nach Einschätzung der Erfinder zielführend, diesen an die zu erwartende Querschnittsgeometrie der auszuhärtenden strangförmigen Elemente anzupassen. Bevorzugt ist dabei eine erfindungsgemäße Strahlungsvorrichtung, wobei der längliche Bestrahlungskanal zumindest abschnittsweise, bevorzugt über die gesamte Länge, einen kreisförmigen oder vieleckigen, beispielsweise einen sechseckigen Querschnitt, aufweist. Bevorzugt ist ebenfalls eine erfindungsgemäße Strahlungsvorrichtung, wobei der Bestrahlungskanal einen mittleren Durchmesser quer zur Längsrichtung im Bereich von 5 bis 130 mm, bevorzugt im Bereich von 10 bis 100 mm, besonders bevorzugt im Bereich von 20 bis 70 mm, aufweist.

Auch wenn es prinzipiell denkbar ist, die Abmessungen des Bestrahlungskanals so auszulegen, dass dieser über die gesamte Länge möglichst dicht an dem zu umgebenden Element anliegt, ist es nach Einschätzung der Erfinder bevorzugt, wenn das den Bestrahlungskanal umgebende Gehäuse im Inneren einen gewissen Abstand zu dem umfassten strangförmigen Element aufweist und demnach in seinem Inneren eine Bestrahlungskammer aufweist. Durch den dadurch entstehenden Freiraum ist es besonders leicht möglich, die Strahlungsquellen in einem optimalen Abstand zum strangförmigen Element zu platzieren. Zudem ermöglicht es der zusätzliche freie Innenraum in der Bestrahlungskammer, dass auch leicht gekrümmte Bereiche des strangförmigen Elementes ohne das Auftreten von Spannungen im Inneren der Strahlungsvorrichtung platziert werden können. Um im späteren Einsatz ein zuverlässiges Führen der Strahlungsvorrichtung entlang des Stranges zu ermöglichen, ist es jedoch zielführend, wenn die Öffnungen des Bestrahlungskanals im Bereich der Seitenöffnung hinsichtlich der Querschnittsfläche möglichst weitgehend den Abmessungen des zu umgebenden strangförmigen Elementes entsprechen. Hierdurch wird eine stabile Führung der Strahlungsvorrichtung ermöglicht und ein gleichbleibender Abstand der Strahlungsquellen zum Strang gewährleistet. Zudem ermöglicht eine entsprechende Reduktion der Querschnittsfläche der Seitenöffnungen und die dadurch bedingte Ausbildung einer Bestrahlungskammer, wie sie beispielsweise durch Verblendungselemente erreicht werden kann, eine leichtere Abschirmung der Umwelt vor der elektromagnetischen Strahlung der Strahlungsquellen. Bevorzugt ist folglich eine erfindungsgemäße Strahlungsvorrichtung, wobei die Querschnittsfläche des länglichen Bestrahlungskanals quer zur Längsrichtung im Bereich einer oder beider, bevorzugt beider, Seitenöffnungen gegenüber der Querschnittsfläche im Inneren verringert ist, bevorzugt durch Verblendungselemente des Gehäuses, so dass der Bestrahlungskanal im Inneren des Gehäuses eine Bestrahlungskammer umfasst, wobei die Form und/oder Abmessungen der Querschnittsfläche des länglichen Bestrahlungskanals im Bereich einer oder beider, bevorzugt beider, Seitenöffnungen, mit der Form und/oder den Abmessungen des zu umgebenden strangförmigen Elementes korreliert.

Im Zuge der Entwicklung haben die Erfinder erkannt, dass es zwar prinzipiell möglich wäre, das strangförmige Element von einer Seite in den Bestrahlungskanal einzuführen und somit das strangförmige Element quasi einzufädeln, dass dies in der Praxis jedoch mit einem erhöhten Aufwand verbunden ist und insbesondere für Teilbereiche komplexer Makrostrukturen, welche baumartige Verzweigungen aufweisen, nicht geeignet ist, die gesamte Makrostruktur auszuhärten. Deshalb umfasst das Gehäuse erfindungsgemäß zumindest zwei Gehäuseteile, welche derart mit einem Verbindungsmechanismus verbunden sind, dass diese relativ zueinander bewegt werden können und dadurch ein Öffnen und Schließen des Gehäuses ermöglichen. Hierdurch ist es möglich, das Gehäuse zu öffnen und den auszuhärtenden Strang bequem im Inneren des Bestrahlungskanals anzuordnen, wobei das anschließende Schließen des Gehäuses für einen guten Sitz der Strahlungsvorrichtung um das strangförmige Element herum sorgt. In analoger Weise kann das strangförmige Element nach Beendigung der Bestrahlung aus dem Gehäuse entnommen werden, sodass es bei der Aushärtung komplexer Makrostrukturen besonders leicht möglich ist, die erfindungsgemäße Strahlungsvorrichtung nach und nach um die verschiedenen Teilabschnitte herumzulegen und diese nacheinander auszuhärten.

Hinsichtlich der Ausgestaltung des Gehäuses lässt sich ein besonders robuster Aufbau dann realisieren, wenn genau zwei Gehäuseteile vorgesehen werden. Besonders zweckmäßig ist es dabei, wenn diese Gehäuseteile auf der dem jeweils anderen Gehäuseteil zugewandten Seite eine entsprechende längliche Kanalausnehmung umfassen, sodass sich die Kanalausnehmungen beim Schließen des Gehäuses zum Bestrahlungskanal vereinigen. Eine solche Ausgestaltung wird beispielsweise dann erreicht, wenn die Gehäuseteile jeweils als Halbschalen ausgebildet werden, in deren oberer Wandung jeweils Teilausnehmungen vorgesehen werden, die im geschlossenen Zustand des Gehäuses die Seitenöffnungen des Bestrahlungskanals bilden. Bevorzugt ist folglich eine erfindungsgemäße Strahlungsvorrichtung, wobei die zwei Gehäuseteile, bevorzugt sämtliche Gehäuseteile, eine längliche Kanalausnehmung umfassen, wobei der längliche Bestrahlungskanal im geschlossen Zustand durch die kombinierten Kanalausnehmungen der Gehäuseteile gebildet wird. Bevorzugt ist ebenfalls eine erfindungsgemäße Strahlungsvorrichtung, wobei die zwei Gehäuseteile jeweils als Halbschalen ausgebildet sind, wobei die Halbschalen im Wandbereich jeweils zumindest zwei Teilausnehmungen umfassen, die so angeordnet sind, dass die zwei Seitenöffnungen des länglichen Bestrahlungskanals jeweils durch zwei Teilausnehmungen unterschiedlicher Gehäuseteile gebildet werden, wobei die Halbschalen bevorzugt im Wesentlichen das gleiche Innenvolumen aufweisen, wobei die Innenflächen der Halbschalen besonders bevorzugt im Wesentlichen identisch sind.

Für den Verbindungsmechanismus, d.h. den Teil der Strahlungsvorrichtung, welcher das Öffnen und Schließen durch Bewegung der Gehäuseteile ermöglicht, sind prinzipiell viele Ausgestaltungen denkbar, beispielsweise an Schraubzwingen angelehnte Gewindeanordnungen, bspw. unter Einsatz einer Gewindespindel. Insbesondere können auch zwei oder mehr Verbindungsmechanismen vorgesehen sein, die beispielsweise gleich oder verschieden voneinander ausgeführt werden können. Nach Einschätzung der Erfinder ist es jedoch für im Wesentlichen alle Ausführungsformen bevorzugt, als Verbindungsmechanismus einen Klappmechanismus vorzusehen, d.h. einen Mechanismus, mit dem das Gehäuse auf- und zugeklappt werden kann, wie es beispielsweise durch den Einsatz von Gelenken und Scharnieren möglich ist. Ein Klappmechanismus ist nicht nur einfach in der Umsetzung und ohne großen Aufwand besonders robust auszuführen, sondern ermöglicht auch ein im Vergleich mit vielen anderen Verbindungsmechanismen besonders schnelles Öffnen und Schließen des Gehäuses. Nach Einschätzung der Erfinder ist es dabei insbesondere bevorzugt, wenn der Verbindungsmechanismus mit einer gewissen Vorspannung ausgeführt wird, die eine Kraft in Richtung des geschlossenen Gehäuses ausübt, um während des Bestrahlens einem unerwünschten Öffnen des Gehäuses einen Widerstand entgegenzusetzen. Aus dem gleichen Grund kann es nach Einschätzung der Erfinder zudem sinnvoll sein, am Gehäuse einen Verschlussmechanismus vorzusehen, mit dem im Einsatz ein ungewolltes Öffnen des geschlossenen Gehäuses verhindert werden kann. Bevorzugt ist daher eine erfindungsgemäße Strahlungsvorrichtung, wobei der Verbindungsmechanismus ein Klappmechanismus ist, wobei der Klappmechanismus bevorzugt ein oder mehrere Klappelemente, insbesondere Gelenke, umfasst, durch die die zwei Gehäuseteile beweglich miteinander verbunden sind. Bevorzugt ist auch eine erfindungsgemäße Strahlungsvorrichtung, wobei der Verbindungsmechanismus ein federbelasteter Verbindungsmechanismus ist, der im geöffneten Zustand des Gehäuses ein Schließen des Gehäuses bewirkt oder befördert. Bevorzugt ist ebenfalls eine erfindungsgemäße Strahlungsvorrichtung, wobei die Strahlungsvorrichtung einen Verschlussmechanismus umfasst, der dazu eingerichtet ist, das geschlossene Gehäuse reversibel und zerstörungsfrei im geschlossenen Zustand zu fixieren.

In Übereinstimmung mit dem fachmännischen Verständnis wird die tatsächliche Aushärtung der reaktiven Klebebänder in dem beschriebenen Verfahren durch elektromagnetische Strahlung bewirkt. Für diesen Zweck umfasst die erfindungsgemäße Strahlungsvorrichtung eine Vielzahl von Strahlungsquellen, die so angeordnet sind, dass sie das Innere des länglichen Bestrahlungskanals mit elektromagnetischer Strahlung beaufschlagen können. Zur Umsetzung dieser Anordnung kommen nach Einschätzung der Erfinder besonders zwei Ausgestaltungen infrage. Zum einen können die Strahlungsvorrichtungen auf der vom Bestrahlungskanal abgewandten Außenseite des Gehäuses angebracht und so ausgerichtet werden, dass sie durch dafür vorgesehene Löcher im Gehäuse in den Bestrahlungskanal hineinstrahlen können. Hierdurch ist es vorteilhafterweise möglich, einen ungewollten Kontakt zwischen den Strahlungsquellen und dem auszuhärtenden Strang und dadurch mögliche Verunreinigungen der Strahlungsquellen zuverlässig zu vermeiden. Alternativ lassen sich die Strahlungsquellen jedoch auch unmittelbar im Inneren des Bestrahlungskanals, bevorzugt im Bereich der Bestrahlungskammer anordnen, wodurch vorteilhafterweise ein besonders kompakter Aufbau erreicht wird, bei dem die von den Strahlungsquellen emittierte Strahlung besonders vollständig auf den auszuhärtenden Strang appliziert werden kann. Nach Einschätzung der Erfinder ist es für eine effiziente Durchführung des erfindungsgemäßen Verfahrens besonders vorteilhaft, wenn die erfindungsgemäße Strahlungsvorrichtung eine möglichst gleichmäßige Bestrahlung des auszuhärtenden Stranges ermöglicht. Hierfür schlagen die Erfinder vor, die Strahlungsquellen möglichst gleichmäßig über den Umfang und die Länge des Bestrahlungskanals zu verteilen. Hieraus folgt im Falle von möglichst gleichartig ausgebildeten Gehäuseteilen, dass diese im Wesentlichen über die gleiche Anzahl von Strahlungsquellen verfügen. Bevorzugt ist entsprechend eine erfindungsgemäße Strahlungsvorrichtung, wobei das Gehäuse eine Vielzahl von durchgehenden Bestrahlungsausnehmungen umfasst, und wobei die Strahlungsquellen zumindest teilweise, bevorzugt überwiegend, besonders bevorzugt im Wesentlichen vollständig so auf der vom Bestrahlungskanal abgewandten Seite des Gehäuses angeordnet sind, dass diese das Innere des länglichen Bestrahlungskanals durch die Bestrahlungsausnehmungen mit elektromagnetischer Strahlung zu bestrahlen. Bevorzugt ist zusätzlich oder alternativ eine erfindungsgemäße Strahlungsvorrichtung, wobei die Strahlungsquellen zumindest teilweise, bevorzugt überwiegend, besonders bevorzugt im Wesentlichen vollständig im Inneren des Bestrahlungskanals angeordnet sind.

Vor diesem Hintergrund schlagen die Erfinder insbesondere vor, die Strahlungsquellen möglichst symmetrisch entlang dem Bestrahlungskanal anzuordnen. Bevorzugt ist nämlich eine erfindungsgemäße Strahlungsvorrichtung, wobei die Strahlungsquellen in der Strahlungsvorrichtung symmetrisch angeordnet sind, bevorzugt mit einer Rotationssymmetrie bezogen auf die Längsrichtung des Bestrahlungskanals von C₄ oder mehr, bevorzugt C₆ oder mehr, besonders bevorzugt C₈ oder mehr. Bevorzugt ist ebenfalls eine erfindungsgemäße Strahlungsvorrichtung, wobei an beiden Gehäuseteilen Strahlungsquellen angeordnet sind, wobei sich die Zahl der jeweils an den Gehäuseteilen angeordneten Strahlungsquellen um 20 % oder weniger, bevorzugt 10 % oder weniger, besonders bevorzugt 5 % oder weniger, besonders bevorzugt im Wesentlichen nicht, unterscheidet.

Den Erfindern ist es gelungen, insoweit räumliche Dimensionen anzugeben, mit denen sich nach Einschätzung der Erfinder vorteilhafte Anordnungen in zielführender Weise realisieren lassen. Bevorzugt ist nämlich eine erfindungsgemäße Strahlungsvorrichtung, wobei die Strahlungsquellen entlang der Längsrichtung des Bestrahlungskanals verteilt angeordnet sind, wobei der mittlere Abstand benachbarter Strahlungsquellen entlang der Längsrichtung bevorzugt im Bereich von 5 bis 40 mm, bevorzugt im Bereich von 10 bis 30 mm, besonders bevorzugt im Bereich von 15 bis 25 mm, liegt, wobei die Strahlungsquellen in äquidistanten Abständen angeordnet sind. Bevorzugt ist auch eine erfindungsgemäße Strahlungsvorrichtung, wobei die Strahlungsquellen in zwei oder mehr, bevorzugt vier oder mehr, Elementreihen aus vier oder mehr, bevorzugt sechs oder mehr, Strahlungsquellen, angeordnet sind, wobei die Elementreihen bevorzugt im Wesentlichen parallel zur Längsrichtung des Bestrahlungskanals angeordnet sind.

Bevorzugt ist dabei zum Zwecke einer möglichst effizienten und gleichmäßigen Bestrahlungsleistung eine erfindungsgemäße Strahlungsvorrichtung, wobei die Innenwand des länglichen Bestrahlungskanals zumindest abschnittweise mit strahlungsreflektierenden Elementen, insbesondere Spiegeln, versehen ist, wobei die strahlungsreflektierenden Elemente bevorzugt aus Polytetrafluorethylen bestehen oder damit beschichtet sind.

Nach Erkenntnis der Erfinder kommt bei der Auslegung der erfindungsgemäßen Strahlungsvorrichtung einem Aspekt eine große Bedeutung bei. Hierbei handelt es sich um den Abstand, den die Strahlungsquellen in geschlossenem Zustand von der Oberfläche des im Bestrahlungskanal angeordneten Stranges aufweisen. Hierdurch lässt sich die im Inneren realisierte Bestrahlungsintensität besonders zielgenau steuern, insbesondere wenn ein im Inneren des Gehäuses angeordneter Strang in den Seitenbereichen des Bestrahlungskanals durch eine spezifische Anpassung der Seitenöffnung in der Strahlungsvorrichtung besonders gut stabilisiert wird. Bevorzugt ist daher eine erfindungsgemäße Strahlungsvorrichtung, wobei die Strahlungsquellen so angeordnet sind, dass sie bei geschlossenem Gehäuse zu der Oberfläche eines im Bestrahlungskanal angeordneten strangförmigen Elements einen mittleren Abstand im Bereich von 5 bis 200 mm, bevorzugt im Bereich von 10 bis 100 mm, besonders bevorzugt im Bereich von 15 bis 50 mm, aufweisen.

Nach Einschätzung der Erfinder eignen sich als Strahlungsquellen insbesondere LEDs, da diese nicht nur langlebig, zuverlässig und kostengünstig sind, sondern sich regelmäßig auch besonders effizient steuern lassen, beispielsweise durch Pulsweitenmodulation (PWM) bei der Dimmung, wobei LEDs zudem in einer Vielzahl von Varianten mit unterschiedlichen Emissionscharakteristika verfügbar sind. Insoweit haben die Erfinder erkannt, dass bevorzugt LEDs mit relativ kleinen Abstrahlwinkeln eingesetzt werden sollten, da in eigenen Versuchen mit größeren Abstrahlwinkeln, beispielsweise von 120°, in einigen Fällen keine zufriedenstellende Funktionsweise erreicht wurde beziehungsweise die Zahl der notwendigen LEDs hätte weiter erhöht werden müssen. Bevorzugt ist somit eine erfindungsgemäße Strahlungsvorrichtung, wobei die Strahlungsquellen zumindest teilweise, bevorzugt überwiegend, besonders bevorzugt im Wesentlichen vollständig, LEDs sind, wobei die LEDs bevorzugt einen Abstrahlwinkel im Bereich von 30° bis 60°, bevorzugt im Bereich von 40° bis 50°, aufweisen. Bevorzugt ist überdies eine erfindungsgemäße Strahlungsvorrichtung, wobei die Strahlungsquellen zumindest teilweise, bevorzugt überwiegend, besonders bevorzugt im Wesentlichen vollständig, eine optische Strahlungsleistung im Bereich von 700 bis 1100 mW, bevorzugt im Bereich von 800 bis 1000 mW, besonders bevorzugt im Bereich von 850 bis 950 mW, aufweisen.

Der Fachmann versteht, dass die Strahlungscharakteristika der eingesetzten Strahlungsquellen auf die auszuhärtenden Klebemassen der reaktiven Klebebänder abgestimmt werden sollten, die zur Ummantelung des strangförmigen Elementes verwendet werden. Eine erfindungsgemäße Strahlungsvorrichtung, welche zur Aushärtung von UV-strahlungshärtenden Klebemassen eingesetzt werden soll, sollte entsprechend UV-Strahlungsquellen aufweisen, welche im relevanten Wellenlängenbereich eine hinreichende Emission zeigen, wobei es in Übereinstimmung mit dem fachmännischen Verständnis sinnvoll ist, wenn die entsprechenden Strahlungsquellen in diesem Bereich auch ihr Intensitätsmaximum der Emission aufweisen, um einen unnötigen Energieverlust zu vermeiden. In analoger Weise ist es beim Einsatz von thermisch härtenden reaktiven Klebemassen sinnvoll, die Strahlungsquellen als IR-Strahlungsquellen auszubilden, die einen effizienten Eintrag von Wärmeenergie in die auszuhärtende Klebemasse ermöglichen. Bevorzugt ist insoweit eine erfindungsgemäße Strahlungsvorrichtung, wobei die Strahlungsvorrichtung als Strahlungsquellen UV-Strahlungsquellen umfasst, wobei die UV-Strahlungsquellen bevorzugt elektromagnetische Strahlung emittieren, deren Intensitätsmaximum bei einer Wellenlänge λ im Bereich von 10 bis 500 nm, besonders bevorzugt im Bereich von 200 bis 500 nm, liegt. Insbesondere bevorzugt sind LED-Strahlungsquellen mit Intensitätsmaxima im Bereich von 350 bis 500 nm, bevorzugt im Bereich von 350 bis 405 nm. Bevorzugt ist außerdem eine erfindungsgemäße Strahlungsvorrichtung, wobei die Strahlungsvorrichtung als Strahlungsquellen IR-Strahlungsquellen umfasst, wobei die IR-Strahlungsquellen bevorzugt elektromagnetische Strahlung emittieren, deren Intensitätsmaximum bei einer Wellenlänge λ im Bereich von 780 nm bis 1 mm, bevorzugt im Bereich von 780 nm bis 50 µm, besonders bevorzugt im Bereich von 780 nm bis 3 µm, liegt.

Nach Einschätzung der Erfinder ist es besonders vorteilhaft, verschiedene Arten von Strahlungsquellen, insbesondere IR- und UV-Strahlungsquellen in der gleichen Strahlungsvorrichtung vorzusehen. Hierdurch ist die erfindungsgemäße Strahlungsvorrichtung nicht nur flexibel in der Lage, unterschiedliche aushärtbare Klebemassen auszuhärten, sondern es kommt in synergistischer Weise beim Einsatz zur Aushärtung von UV-strahlungshärtenden Klebemassen bei Bedarf zusätzlich zu einer IR-Bestrahlung, wodurch während des Aushärteprozesses eine Temperaturerhöhung bedingt werden kann, welche für die Qualität der UV-strahlungsbasierten Aushärtung besonders vorteilhaft ist.

Bevorzugt ist demgemäß eine erfindungsgemäße Strahlungsvorrichtung, wobei die Strahlungsvorrichtung als Strahlungsquellen UV-Strahlungsquellen und IR-Strahlungsquellen umfasst.

Wie vorstehend erläutert, kann es als großer Vorteil der erfindungsgemäßen Strahlungsvorrichtung gesehen werden, dass die Anordnung der Strahlungsquellen in unmittelbarer Nähe zum auszuhärtenden Strang und die enge Umfassung dieses Stranges es ermöglichen, dass häufig bereits die Abwärme der Strahlungselemente zu einer Temperaturerhöhung des bestrahlten Stranges führt, die eine Aushärtung begünstigt, sogar wenn keine IR-Strahlungsquellen vorgesehen werden. Zur Erleichterung des Temperaturmanagements ist es jedoch nach Einschätzung der Erfinder bevorzugt, zusätzlich Kühl- und/oder Heizelemente vorzusehen, um eine feinere Steuerung des Temperaturmanagements zu ermöglichen und insbesondere nicht nur hohe Temperaturen bei der Aushärtung ermöglichen zu können, sondern auch eine Überhitzung der Strahlungsvorrichtung sicher vermeiden zu können. Bevorzugt ist demnach eine erfindungsgemäße Strahlungsvorrichtung, wobei die Strahlungsvorrichtung ein oder mehrere Kühlelemente zur Kühlung der Strahlungsvorrichtung umfasst, bevorzugt passive Kühlelemente, wobei die Kühlelemente bevorzugt an der vom Bestrahlungskanal abgewandten Seite des Gehäuses angeordnet sind. Bevorzugt ist gleichfalls eine erfindungsgemäße Strahlungsvorrichtung, wobei die Strahlungsvorrichtung ein oder mehrere Heizelemente zur Temperierung des Inneren des Bestrahlungskanals umfasst, wobei die Heizelemente bevorzugt im Inneren des Bestrahlungskanals angeordnet sind.

Wie vorstehend erläutert, ist die erfindungsgemäße Strahlungsvorrichtung so ausgelegt, dass diese ein in ihrem Inneren angeordnetes strangförmiges Element abschnittsweise umgeben kann, d.h. in einer Form, in der andere Abschnitte des strangförmigen Elementes an zumindest einer Seite des Bestrahlungskanals hinausragen. Der längliche Bestrahlungskanal umgibt das strangförmige Element in Umfangsrichtung, ist also um dieses herum angeordnet. Der Fachmann versteht insoweit, dass das Gehäuse, welches in der Praxis wohl meist möglichst weitgehend als solides, geschlossenes Gehäuse ausgebildet sein wird, theoretisch Öffnungen und Ausnehmungen umfassen kann, oder dass es infolge eines nicht perfekten Schließens der Gehäuseteile zu einer Abweichung einer vollständigen Umfassung des strangförmigen Elementes kommt. Der Fachmann versteht, dass diese Abweichungen von einer idealen Umfassung auftreten können und dass die Strahlungsvorrichtung den im Bestrahlungskanal angeordneten Abschnitt des strangförmigen Elementes entsprechend nicht immer vollständig, sondern in manchen Fällen auch nur teilweise umgibt, beispielsweise wenn sich eine Versorgungsbohrung von außen durch das Gehäuse bis zum Bestrahlungskanal erstreckt. Gleichzeitig schlagen die Erfinder jedoch vor, die erfindungsgemäße Strahlungsvorrichtung so auszulegen, dass diese eine möglichst vollständige Umfassung des jeweiligen Teilabschnittes ermöglicht, insbesondere auch um ein ungewolltes Austreten von elektromagnetischer Strahlung in die Umwelt möglichst gut zu unterbinden. Bevorzugt ist insoweit eine erfindungsgemäße Strahlungsvorrichtung, wobei die Strahlungsvorrichtung dazu eingerichtet ist, dass das geöffnete Gehäuse um ein strangförmiges Element herum geschlossen werden kann, so dass das strangförmige Element im länglichen Bestrahlungskanal angeordnet ist und das Gehäuse das strangförmige Element abschnittsweise in Umfangsrichtung zu mehr als 70 %, bevorzugt mehr als 90 %, besonders bevorzugt im Wesentlichen vollständig umgibt, bezogen auf die Oberfläche des im Bestrahlungskanals angeordneten Abschnitts des strangförmigen Elements.

Es kann als großer Vorteil der erfindungsgemäßen Strahlungsvorrichtung gesehen werden, dass diese besonders kompakt ausgeführt werden kann. Dies ermöglicht es beispielsweise, am Gehäuse der Strahlungsvorrichtung einen Handgriff vorzusehen, durch den die Strahlungsvorrichtung als manuell tragbare Strahlungsvorrichtung ausgeführt ist, die dafür vorgesehen ist, von Arbeitskräften im erfindungsgemäßen Verfahren manuell bedient zu werden, was gerade bei kleineren Betrieben eine kosteneffiziente Lösung und einen flexiblen Einsatz ermöglicht. Bevorzugt ist also für bestimmte Anwendungen eine erfindungsgemäße Strahlungsvorrichtung, wobei die Strahlungsvorrichtung einen Handgriff zur manuellen Führung der Strahlungsvorrichtung umfasst, wobei der Handgriff bevorzugt am Gehäuse befestigt ist.

Mit Blick auf einen möglichst hohen Automatisierungsgrad schlagen die Erfinder jedoch vor, die Strahlungsvorrichtung vielmehr als Endeffektor einer automatisierten Bewegungsvorrichtung auszuführen, was dank der kompakten Abmessungen besonders leicht möglich ist. Insbesondere in Kombination mit einem Roboterarm ergeben sich erfindungsgemäße Strahlungsvorrichtungen, die automatisiert und mit hoher Präzision entlang der auszuhärtenden strangförmigen Elemente geführt werden können, wobei es die hohen Bewegungsfreiheitsgrade des Roboterarms und die Möglichkeit zum Öffnen und Schließen der erfindungsgemäßen Strahlungsvorrichtung ermöglichen, auch komplexe Makrostrukturen schnell und effizient auszuhärten. Bevorzugt ist folglich eine erfindungsgemäße Strahlungsvorrichtung, wobei die Strahlungsvorrichtung eine Befestigungsvorrichtung zur Befestigung der Strahlungsvorrichtung an einer automatisierten Bewegungsvorrichtung, bevorzugt einem Manipulator, besonders bevorzugt Roboterarm, umfasst, wobei die Befestigungsvorrichtung bevorzugt am Gehäuse angeordnet ist. Hierbei umfasst der Ausdruck "automatisiert" auch teilautomatisierte Bewegungsvorrichtungen, wobei vollautomatisierte Bewegungsvorrichtungen bevorzugt sind.

Besonders bevorzugt ist es bei der Ausgestaltung mit einer automatisierten Bewegungsvorrichtung, wenn die Strahlungsvorrichtung in Richtung eines erfindungsgemäßen Systems weiterentwickelt wird, bei dem die automatisierte Bewegungsvorrichtung nicht nur die Strahlungsvorrichtung umfasst, sondern auch eine Umwicklungsvorrichtung, mit der das später auszuhärtende Klebeband um den Strang gelegt werden kann. Eine solche Umwicklungsvorrichtung ist der erfindungsgemäßen Strahlungsvorrichtung aus Verfahrenssicht typischerweise vorgelagert, sodass der zu bearbeitende Strang zunächst von der Umwicklungsvorrichtung mit Klebeband umwickelt und anschließend von der erfindungsgemäßen Strahlungsvorrichtung bestrahlt und dadurch ausgehärtet wird. Eine entsprechend ausgerüstete automatisierte Bewegungsvorrichtung, beispielsweise ein Roboterarm, kann auf diese Weise in einem erfindungsgemäßen System entlang eines in einer Halteanordnung angeordneten strangförmigen Elementes geführt werden, um dieses kontinuierlich zu ummanteln. Bevorzugt ist entsprechend eine erfindungsgemäße Strahlungsvorrichtung, wobei die Strahlungsvorrichtung eine automatisierte Bewegungsvorrichtung, bevorzugt einen Manipulator, besonders bevorzugt einen Roboterarm, umfasst, wobei die automatisierte Bewegungsvorrichtung über eine Befestigungsvorrichtung an dem Gehäuse befestigt ist, wobei die automatisierte Bewegungsvorrichtung besonders bevorzugt eine Umwicklungsvorrichtung umfasst, die dazu eingerichtet ist, ein strangförmiges Element mit einem Klebeband zu umwickeln.

Die Erfindung betrifft auch ein Verfahren zur Ummantelung von strangförmigen Elementen mit einer erfindungsgemäßen Strahlungsvorrichtung, umfassend die Verfahrensschritte:
a) Herstellen oder Bereitstellen eines strangförmigen Elementes,
b) Umwickeln des strangförmigen Elementes mit einem Klebeband zum Erhalt eines umwickelten Strangs, wobei das Klebeband als aushärtbare Klebemasse eine strahlungshärtende und/oder thermisch härtende Klebemasse umfasst,
c) Anordnen des umwickelten Strangs in einer Halteanordnung zur Einstellung einer vorbestimmten Form und zum Erhalt eines geformten Strangs,
d) Öffnen des Gehäuses der Strahlungsvorrichtung, Anordnen des geöffneten Gehäuses um den geformten Strang und Schließen des Gehäuses, so dass der geformte Strang im länglichen Bestrahlungskanal angeordnet ist und das Gehäuse den geformten Strang abschnittsweise in Umfangsrichtung zumindest teilweise umgibt, und
e) Aushärten der aushärtbaren Klebemasse im geformten Strang durch Bestrahlen des Klebebandes mit elektromagnetischer Strahlung der Wellenlänge λ mittels der Strahlungsquellen der Strahlungsvorrichtung zum Erhalt eines ummantelten Strangs.

In dem erfindungsgemäßen Verfahren wird zunächst ein strangförmiges Element hergestellt oder bereitgestellt. Bei einem solchen strangförmigen Element kann es sich beispielsweise um Schläuche oder Kabel handeln, wobei auch ein Bündel von mehreren dieser Teilelemente eingesetzt werden kann. Die Herstellung von strangförmigen Elementen kann dabei beispielsweise durch das Verbinden dieser ebenfalls strangförmigen Teilelemente erfolgen. Das erfindungsgemäße Verfahren ist insbesondere bei der Herstellung von Kabelbäumen durch Ummantelung von Kabelsträngen besonders leistungsfähig. Bevorzugt ist deshalb ein erfindungsgemäßes Verfahren, wobei das strangförmige Element ein oder mehrere Leitungen und/oder Kabel umfasst, wobei das strangförmige Element bevorzugt ein Kabelstrang ist, der eine Vielzahl von Kabeln umfasst, wobei mit dem Verfahren durch Ummantelung des Kabelstrangs ein Teil eines Kabelbaums erhalten wird. Bevorzugt ist auch ein erfindungsgemäßes Verfahren, wobei das strangförmige Element zwei oder mehr strangförmige Teilelemente umfasst, bevorzugt Leitungen und/oder Kabel, wobei die strangförmigen Teilelemente vor dem Umwickeln des strangförmigen Elements bevorzugt untereinander verbunden und/oder relativ zueinander vorfixiert werden, besonders bevorzugt durch den Einsatz von Klemmen und/oder Kabelbindern und/oder Klebeband, ganz besonders bevorzugt durch den Einsatz von Klebeband, oder besonders bevorzugt durch eine mit dem Verfahren zuvor erzeugte Ummantelung.

In Übereinstimmung mit dem fachmännischen Verständnis kann es sich bei dem strangförmigen Element um einen Bestandteil einer größeren Makrostruktur handeln, beispielsweise eines Bestandteils eines größeren Kabelbaums, welcher eine Vielzahl an über Verbindungsbereiche, beispielsweise Gabelungen, verbundenen Bestandteilen umfasst. Hierbei kann die einfache Aushärtung auch von komplexen Strukturen und die leichte Anwendbarkeit der erfindungsgemäßen Strahlungsvorrichtung auf Teilbereiche als großer Vorteil des erfindungsgemäßen Verfahrens gesehen werden. Bevorzugt ist ein erfindungsgemäßes Verfahren, wobei das strangförmige Element Bestandteil einer Makrostruktur ist, die eine Vielzahl von strangförmigen Einzelelementen umfasst, die innerhalb der Makrostruktur verlaufen, wobei die Makrostruktur eine Vielzahl von miteinander über Verbindungsbereiche verbundenen strangförmigen Bestandteilen umfasst.

Das strangförmige Element wird mit einem Klebeband umwickelt, um dadurch einen umwickelten Strang zu erhalten, in dem das strangförmige Element von dem noch nicht ausgehärteten Klebeband umgeben ist. Der Begriff Klebeband ist für den Fachmann im Bereich der Klebetechnik klar. Im Rahmen der vorliegenden Erfindung bezeichnet der Ausdruck Band alle dünnen, flächigen Gebilde, d.h. Gebilde mit einer überwiegenden Ausdehnung in zwei Dimensionen, insbesondere Folien, Folienabschnitte und Etiketten, bevorzugt Bänder mit ausgedehnter Länge und begrenzter Breite sowie entsprechende Bandabschnitte.

Für das Umwickeln schlagen die Erfinder dabei eine Wickeltechnik vor, die in einer besonders robusten Ummantelung resultiert, wobei es insbesondere zielführend ist, den umwickelten Strang in den zu ummantelnden Bereichen vollständig mit Klebeband zu umwickeln, insbesondere in solchen Bereichen, die im späteren Einsatz des ummantelten Elements hohen mechanischen Belastungen ausgesetzt sind. Bevorzugt ist vor diesem Hintergrund ein erfindungsgemäßes Verfahren, wobei das Klebeband beim Umwickeln in Schraubenlinien um das strangförmige Element gelegt wird, wobei das Umwickeln bevorzugt so erfolgt, dass jede nachfolgende Wicklung des Klebebandes zumindest teilweise, bevorzugt zumindest zu 30 % der Fläche, besonders bevorzugt zumindest 40 % der Fläche, ganz besonders bevorzugt zumindest 45 % der Fläche und bevorzugt zu nicht mehr als 80 % der Fläche, besonders bevorzugt zu nicht mehr als 60 % der Fläche, ganz besonders bevorzugt zu nicht mehr als 55 % der Fläche, auf die vorrangehende Wicklung des Klebebandes appliziert wird.

In einer alternativen Verfahrensführung wird das strangförmige Element in axialer Richtung von dem Klebeband umhüllt. Die Umwicklung eines strangförmigen Elements mit dem Klebeband erfolgt dabei nicht -wie vorstehend erläutert- schraubenlinienförmig, sondern derart, dass beim Umwickeln eine Längsachse des Bandes im Wesentlichen parallel zur Verlaufsrichtung des strangförmigen Elements ausgerichtet ist. Im Querschnitt gesehen liegt das Klebeband dabei in Form einer archimedischen Spirale um das strangförmige Element. Diese Art der Wicklung wird teilweise auch als "Einschlagen des Kabelbaums" bezeichnet.

Um eine möglichst effiziente Umwicklung des strangförmigen Elements mit dem Klebeband zu ermöglichen, schlagen die Erfinder vor, die aushärtbare Klebemasse als Haftklebemasse auszubilden, um somit ein leichteres Anhaften an dem strangförmigen Element zu erreichen. Bevorzugt ist entsprechend ein erfindungsgemäßes Verfahren, wobei die aushärtbare Klebemasse eine Haftklebemasse ist.

Eine Haftklebemasse ist dabei in Übereinstimmung mit dem fachmännischen Verständnis eine Klebemasse, die über haftklebrige Eigenschaften verfügt, d.h. über die Eigenschaft bereits unter relativ schwachem Andruck eine dauerhafte Verbindung zu einem Haftgrund einzugehen. Entsprechende Haftklebebänder sind üblicherweise nach Gebrauch im Wesentlichen rückstandsfrei vom Haftgrund wieder ablösbar und in der Regel schon bei Raumtemperatur permanent eigenklebrig, was bedeutet, dass sie eine gewisse Viskosität und Anfassklebrigkeit aufweisen, sodass sie die Oberfläche eines Untergrunds bereits bei geringem Andruck benetzen. Die Haftklebrigkeit eines Haftklebebandes ergibt sich daraus, dass als Klebemasse eine Haftklebemasse verwendet wird. Ohne an diese Theorie gebunden sein zu wollen, wird häufig davon ausgegangen, dass eine Haftklebemasse als extrem hochviskose Flüssigkeit mit einem elastischen Anteil betrachtet werden kann, die demzufolge charakteristische viskoelastische Eigenschaften aufweist, die zu der vorstehend beschriebenen dauerhaften Eigenklebrigkeit und Haftklebefähigkeit führen. Man geht davon aus, dass es bei entsprechenden Haftklebemassen bei mechanischer Deformation sowohl zu viskosen Fließprozessen als auch zum Aufbau elastischer Rückstellkräfte kommt. Der anteilige viskose Fluss dient dabei zur Erzielung von Adhäsion, während die anteiligen elastischen Rückstellkräfte insbesondere zur Erzielung von Kohäsion notwendig sind. Die Zusammenhänge zwischen der Rheologie und der Haftklebrigkeit sind im Stand der Technik bekannt und beispielsweise in "Satas, Handbook of Pressure Sensitive Adhesives Technology", Third Edition, (1999), Seiten 153 bis 203, beschrieben. Zur Charakterisierung des Maßes an elastischem und viskosem Anteil werden üblicherweise der Speichermodul (G`) und der Verlustmodul (G") herangezogen, die mittels dynamisch mechanischer Analyse (DMA), beispielsweise unter Verwendung eines Rheometers, ermittelt werden können, wie es beispielsweise in der WO 2015/189323 offenbart wird. Im Rahmen der vorliegenden Erfindung wird eine Klebemasse vorzugsweise dann als haftklebrig und somit als Haftklebemasse verstanden, wenn bei einer Temperatur von 23 °C im Deformationsfrequenzbereich von 10⁰ bis 10¹ rad/sec G` und G" jeweils zumindest zum Teil im Bereich von 10³ bis 10⁷ Pa liegen.

Unabhängig von einer etwaigen Haftklebrigkeit ist das für das erfindungsgemäße Verfahren wesentlich, dass das Klebeband eine aushärtbare Klebemasse umfasst. Durch die Möglichkeit zur Härtung fungiert die Klebemasse als Strukturklebstoff (vgl. Römpp, Georg Thieme Verlag, Dokumentkennung RD-19-04489, letzte Aktualisierung: September 2012). Nach DIN EN 923: 2006-01 sind Strukturklebstoffe Klebstoffe, die Klebverbindungen bilden, die in einem Gefüge für eine vorgegebene längere Zeitspanne eine festgelegte Festigkeit beibehalten können (nach ASTM-Definition: "bonding agents used for transferring required loads between adherends exposed to service environments typical for the structure involved"). Es sind also Klebstoffe für chemisch und physikalisch hoch beanspruchbare Klebungen, die im ausgehärteten Zustand zur Verfestigung der Klebebänder beitragen.

Im erfindungsgemäßen Verfahren muss die aushärtbare Klebemasse strahlungshärtend und/oder thermisch härtend sein. In Verfahrensschritt e) erfolgt das Aushärten der aushärtbaren Klebemasse nämlich durch das Bestrahlen des Klebebandes bzw. der im Klebeband enthaltenen aushärtbaren Klebemasse mit elektromagnetischer Strahlung einer Wellenlänge λ, welche von den Strahlungsquellen der erfindungsgemäßen Strahlungsvorrichtung bereitgestellt wird. Eine strahlungshärtende Klebemasse ermöglicht dabei eine unmittelbare Aushärtung infolge des Einwirkens elektromagnetischer Strahlung. Die thermisch härtende Klebemasse wird im erfindungsgemäßen Verfahren hingegen mittelbar durch die Einwirkung von elektromagnetischer Strahlung ausgehärtet, indem diese ein Temperaturerhöhung in der Klebemasse oder umliegenden Teilen des Klebebandes induziert, die dann zum Aushärten führt. Hierbei ist es grundsätzlich möglich, dass die eingesetzte aushärtbare Klebemasse sowohl unmittelbar strahlungshärtend als auch thermisch härtend sein kann, was insbesondere für den Fall bevorzugt ist, dass die erfindungsgemäßen Strahlungsvorrichtung UV- und IR-Strahlungsquellen umfasst.

Entsprechende strahlungshärtende und/oder thermisch härtende Klebemassen sind dem Fachmann aus dem Stand der Technik ebenso bekannt, wie die zum Aushärten jeweils eingesetzten Bedingungen, so dass insoweit auf den Stand der Technik verwiesen wird.

Nach Einschätzung der Erfinder ist es für bestimmte Anwendungen vorteilhaft, wenn eine thermisch härtbare Klebemasse eingesetzt wird. Bei Einsatz einer entsprechenden thermisch härtbaren Klebemasse erfolgt das Aushärten in Verfahrensschritt e) derart, dass durch die elektromagnetische Strahlung der Wellenlänge λ Energie in das Klebeband bzw. die Klebemasse eingetragen wird, die dort zu einer Temperaturerhöhung führt. Zielführenderweise wird nach Einschätzung der Erfinder hierfür elektromagnetische Strahlung im infraroten Bereich eingesetzt, wie sie beispielsweise von Infrarotstrahlern bereitgestellt werden kann. Diese Verfahrensführung schließt dabei nicht aus, dass es darüber hinaus auch zu einem anderen Wärmeeintrag in das System kommt, beispielsweise durch Kontaktwäre oder eine separate Heizeinrichtung. Bevorzugt ist somit ein erfindungsgemäßes Verfahren, wobei das Klebeband als aushärtbare Klebemasse eine thermisch härtbare Klebemasse umfasst, wobei die thermisch härtbare Klebemasse bevorzugt dazu eingerichtet ist, dass die thermische Aushärtung durch elektromagnetische Strahlung im infraroten Bereich, besonders bevorzugt elektromagnetische Strahlung mit einer Wellenlänge im Bereich von 780 nm bis 1 mm, ganz besonders bevorzugt im Bereich von 780 nm bis 50 µm, insbesondere bevorzugt im Bereich von 780 nm bis 3 µm, befördert und/oder bewirkt, bevorzugt bewirkt, werden kann.

Insbesondere wegen der Unmittelbarkeit der Aushärtung durch Applikation von elektromagnetischer Strahlung und der präzisen Einstellbarkeit der benötigten Wellenlänge über die eingesetzten Initiatorsysteme ist der Einsatz von strahlungshärtenden Klebemassen, bevorzugt von überwiegend strahlungshärtenden Klebemassen, besonders bevorzugt von im Wesentlichen vollständig strahlungshärtenden Klebemassen, für im Wesentlichen alle Anwendungen explizit bevorzugt. Hierbei kommt insbesondere den UV-härtbaren Klebemassen eine besondere Bedeutung zu, da diese einen besonders leistungsstarken Energieeintrag in das Klebeband und eine effiziente Härtung ermöglichen und eine große Vielzahl an geeigneten Photoinitiatoren verfügbar sind. Besonders bevorzugt ist somit ein erfindungsgemäßes Verfahren, wobei das Klebeband als aushärtbare Klebemasse eine strahlungshärtende Klebemasse umfasst, wobei die strahlungshärtende Klebemasse bevorzugt eine UV-härtbare Klebemasse ist, wobei die UV-härtbare Klebemasse besonders bevorzugt durch Bestrahlung mit elektromagnetischer Strahlung mit einer Wellenlänge im Bereich von 10 bis 500 nm, besonders bevorzugt im Bereich von 200 bis 500 nm, aushärtbar ist. Insbesondere bevorzugt ist die UV-härtbare Klebemasse durch Bestrahlung mit elektromagnetischer Strahlung mit einer Wellenlänge im Bereich von 350 bis 500 nm, bevorzugt im Bereich von 350 bis 405 nm, aushärtbar.

Mit Blick auf die Handhabungseigenschaften des eingesetzten Klebebandes ist es bevorzugt, wenn das Klebeband einen Träger umfasst. Um zu mechanisch belastbaren Ummantelungen zu gelangen, ist es dabei vorteilhaft, wenn der Träger aus einem porösen Material ausgebildet wird, in das die aushärtbare Klebemasse zumindest teilweise einsickern kann, sodass der Aushärtungsprozess auch zu einer Versteifung der Trägerschicht führt. Der aus handhabungstechnischer Sicht vorteilhafte Einsatz eines Trägers kann jedoch mit Blick auf die strahlungsbasierte Aushärtung der Klebemasse nachteilig sein, nämlich dann, wenn der Träger die dem strangförmigen Element zugewandte Klebemasse zu stark gegen die elektromagnetische Strahlung abschirmt. Dies gilt insbesondere dann, wenn das Klebeband beim Umwickeln überlappend angeordnet wird, sodass in Teilbereichen der noch nicht ausgehärteten Ummantelung mehrere Lagen an Trägermaterial übereinander liegen. Die Erfinder schlagen insoweit vor, dass das Trägermaterial auf die eingesetzte elektromagnetische Strahlung bzw. den Aushärtungsmechanismus abgestimmt werden sollte. Insbesondere bei Einsatz von strahlungshärtenden Klebemassen ist es zielführend, wenn das Trägermaterial für die entsprechende Wellenlänge durchlässig ist, beispielsweise, weil es durchgehende Ausnehmungen aufweist und/oder bevorzugt aus einem Material ausgebildet ist, welches für die entsprechende Wellenlänge eine geringe Absorption zeigt. Beim Einsatz von thermisch härtbaren Klebemassen, die mittelbar über den Energieeintrag der elektromagnetischen Strahlung in das Klebeband und die damit verbundene Temperaturerhöhung ausgehärtet werden, hat es sich hingegen als alternative Ausgestaltung erwiesen, das Trägermaterial beispielsweise durch Einfärbung so auszugestalten, dass es die entsprechende elektromagnetische Strahlung besonders weitgehend absorbiert und sich entsprechend besonders leicht mittels elektromagnetischer Strahlung aufheizen lässt. Bevorzugt ist folglich ein erfindungsgemäßes Verfahren, wobei der Träger zumindest abschnittsweise ein Trägermaterial umfasst, das für elektromagnetische Strahlung der Wellenlänge λ zumindest teilweise, bevorzugt im Wesentlichen vollständig, durchlässig ist, oder wobei der Träger zumindest abschnittsweise ein Trägermaterial umfasst, das elektromagnetische Strahlung der Wellenlänge λ, bevorzugt elektromagnetische Strahlung im infraroten Bereich, zumindest teilweise, bevorzugt im Wesentlichen vollständig, absorbiert, um eine strahlungsbasierte Erwärmung des Klebebandes zu bewirken und/oder zu befördern.

Der mit Klebeband umwickelte Strang wird in eine vorbestimmte Form gebracht. Die vorbestimmte Form kann beispielsweise durch einen Kabelsatzplan vorgegeben sein. Diese Ausformung erfolgt im erfindungsgemäßen Verfahren durch den Einsatz einer Halteanordnung, die beispielsweise eine Vielzahl von Halteelementen, beispielsweise Gabeln umfassen kann. Es ist für den Fachmann ersichtlich, dass die Verfahrensschritte b) und c) hierbei gegebenenfalls auch kombiniert werden können, beispielsweise indem das strangförmige Element bereits vor dem Umwickeln mit dem Klebeband in der Halteanordnung angeordnet wird und das Umwickeln abschnittsweise dadurch erfolgt, dass das strangförmige Element beispielsweise teilweise aus der Halteanordnung herausgehoben wird. Für bestimmte Verfahrensführungen bevorzugt ist deshalb ein erfindungsgemäßes Verfahren, wobei das strangförmige Element beim Umwickeln zumindest teilweise in der Halteanordnung angeordnet ist.

In Verfahrensschritt d) wird nun das Aushärten vorbereitet, in dem die erfindungsgemäße Strahlungsvorrichtung in die vorgesehene Einsatzposition gebracht wird. Hierfür wird das Gehäuse geöffnet, um den geformten und umwickelten Strang im länglichen Bestrahlungskanal, d.h. im Einwirkungsbereich der Strahlungsquellen, anzuordnen und durch das Schließen des Gehäuses einen sichere Umfassung des Strangs zu ermöglichen.

In Verfahrensschritt e) erfolgt nun das Aushärten der aushärtbaren Klebemasse im wie vorstehend beschrieben geformten Strang. Dies erfolgt in dem erfindungsgemäßen Verfahren ursächlich durch das Bestrahlen des Klebebandes mit der von den Strahlungsquellen erzeugten elektromagnetischen Strahlung, wobei diese elektromagnetische Strahlung eine spezifische Wellenlänge λ aufweist. Für den Fachmann ist klar, dass beispielsweise ein chemisches Härten, welches bei Tageslicht (welches ebenfalls elektromagnetische Strahlung darstellt) erfolgt, kein Aushärten im Sinne des erfindungsgemäßen Verfahrens ist, da das Aushärten in diesem Fall nicht ursächlich durch die elektromagnetische Strahlung erfolgt.

Bevorzugt ist dabei ein erfindungsgemäßes Verfahren, wobei das Aushärten der aushärtbaren Klebemasse mit elektromagnetischer Strahlung einer Wellenlänge λ im Bereich von 10 bis 380 nm, bevorzugt im Bereich von 200 bis 380 nm, erfolgt, und/oder wobei das Aushärten der aushärtbaren Klebemasse mit elektromagnetischer Strahlung mit einer Wellenlänge λ im Bereich von 780 nm bis 1 mm, bevorzugt im Bereich von 780 nm bis 50 µm, besonders bevorzugt im Bereich von 780 nm bis 3 µm, erfolgt.

In Übereinstimmung mit dem fachmännischen Verständnis muss die eingesetzte elektromagnetische Strahlung nicht monochromatisch sein, d. h. im Spektrum lediglich über eine Wellenlänge verfügen. In der Praxis wird die eingesetzte Strahlung vielmehr regelmäßig ein Spektrum verschiedener Wellenlängen umfassen. Der Fachmann wählt die Wellenlänge der elektromagnetischen Strahlung in Abhängigkeit von der eingesetzten Klebemasse aus, wobei er die notwendigen Informationen beispielsweise tabellierten Werken oder den Herstellerangaben zu den eingesetzten Materialien, beispielsweise den Photoinitiatoren, entnehmen kann. Mit Blick auf eine möglichst zeit- und kosteneffiziente Verfahrensführung ist es für die überwiegende Zahl der praxisrelevanten Fälle vorteilhaft, wenn die zur Aushärtung verwendete elektromagnetische Strahlung der Wellenlänge λ bei Einsatz von elektromagnetischer Strahlung mit einem Spektrum an Wellenlängen, die Wellenlänge mit der höchsten Intensität im Strahlungsspektrum ist oder wenigstens im Strahlungsspektrum zumindest 50 %, bevorzugt zumindest 70 %, besonders bevorzugt zumindest 90 %, der maximalen Intensität aufweist. Typisch ist entsprechend ein erfindungsgemäßes Verfahren, wobei das Aushärten der aushärtbaren Klebemasse mit elektromagnetischer Strahlung erfolgt, deren Intensitätsmaximum bei der Wellenlänge λ liegt.

Mit der vorstehend beschriebenen Verfahrensführung wird mit der erfindungsgemäßen Strahlungsvorrichtung zunächst ein Teilabschnitt des geformten Stranges ausgehärtet, der im Wesentlichen der Länge des Bestrahlungskanals entspricht. Bevorzugt ist es ausgehend hiervon jedoch, die erfindungsgemäße Strahlungsvorrichtung sukzessive entlang des auszuhärtenden Stranges entlangzubewegen, um die Aushärtung eines größeren Teilabschnittes zu bewirken. Bevorzugt ist entsprechend ein erfindungsgemäßes Verfahren, zusätzlich umfassend den Verfahrensschritt:
f) Führen der Strahlungsvorrichtung mit dem geschlossenen Gehäuse entlang des geformten Strangs, zum Aushärten der aushärtbaren Klebemasse in unterschiedlichen Abschnitten des geformten Strangs.

Für den Fachmann ist selbstverständlich, dass es zum Erhalt von mechanisch hoch belastbaren Ummantelungen zielführend ist, die Verfahrensführung so auszulegen, dass die aushärtbare Klebemasse in den bearbeiteten Teilabschnitten hinreichend ausgehärtet wird, was der Fachmann durch die Bestrahlungsdauer und die Aushärtebedingungen einstellen kann. Inhärent bevorzugt ist deshalb ein erfindungsgemäßes Verfahren, wobei die aushärtbare Klebemasse in Verfahrensschritt e) zu mehr als 50 %, bevorzugt zu mehr als 70 %, besonders bevorzugt zu mehr als 90 %, ganz besonders bevorzugt zu mehr als 95 %, ausgehärtet wird. Hierbei ist es den Erfindern gelungen, Strahlungsdosen zu identifizieren, mit denen sich bei typischen strahlungshärtenden Klebemassen, insbesondere UV-strahlungshärtenden Klebemassen, zuverlässig eine ausreichende Härtung bewirken lässt. Bevorzugt ist nämlich ein erfindungsgemäßes Verfahren, wobei das Führen der Strahlungsvorrichtung so erfolgt, dass jeder durch die Strahlungsvorrichtung geführte Bereich des geformten Strangs eine Strahlungsdosis im Bereich von 4 bis 14 J/cm², bevorzugt im Bereich von 6 bis 12 J/cm², besonders bevorzugt im Bereich von 8 bis 10 J/cm², erfährt, was beispielsweise mit einem UV-Power Puck II der Firma EIT oder einem vergleichbaren Messgerät der Firma Opsytec Dr. Gröbel GmbH im UVA-Bereich gemessen werden kann, wobei zwischen diesen Geräten nur vernachlässigbare Abweichungen im Messergebnis beobachtet werden.

Je nach Ausgestaltung des auszuhärtenden Stranges kann die erfindungsgemäße Strahlungsvorrichtung zum Lösen vom umfassten Strang theoretisch über dessen Ende hinausgeführt werden. In der Praxis wird das Ablösen aber vor allem durch das Öffnen des Gehäuses erfolgen, insbesondere wenn unterschiedliche Abschnitte einer größeren Makrostruktur ausgehärtet werden sollen und die erfindungsgemäße Strahlungsvorrichtung dafür beispielswiese über eine Verzweigung hinweg versetzt werden muss. Typisch ist deshalb ein erfindungsgemäßes Verfahren, zusätzlich umfassend den Verfahrensschritt:
g) Öffnen des Gehäuses der Strahlungsvorrichtung zum Entnehmen des ummantelten Strangs.

Der entsprechende ummantelte Strang, indem die aushärtbare Klebemasse ausgehärtet wurde, kann am Ende des erfindungsgemäßen Verfahrens leicht der Halteanordnung entnommen werden.

Die Erfinder haben im Rahmen der Entwicklung der vorliegenden Erfindung erkannt, dass es vorteilhaft ist, ein aktives Temperaturmanagement vorzusehen. Insbesondere werden ausgezeichnete mechanische Haltbarkeiten der erzeugten Ummantelungen erreicht, wenn vor dem Bestrahlen des geformten Stranges ein Vorwärmen stattfindet, bevorzugt über die Abwärme der Strahlungsquellen und/oder eine in der erfindungsgemäßen Strahlungsvorrichtung angeordnete Temperiereinheit. In ähnlicher Weise ist es auch günstig, während des Bestrahlens eine erhöhte Temperatur einzustellen. Besonders leistungsfähige Ummantelungen werden abschließend dann erreicht, wenn nach dem strahlungsbasierten Aushärten auch ein Nachhärten bei einer erhöhten Temperatur vorgesehen wird, was in vorteilhafter Weise wiederum durch die erfindungsgemäße Strahlungsvorrichtung ermöglicht werden kann. Bevorzugt ist ein erfindungsgemäßes Verfahren, wobei das Aushärten in Verfahrensschritt e) vor dem Bestrahlen ein Vorwärmen des geformten Strangs bei einer Temperatur T₁ im Bereich von 20 bis 60 °C, bevorzugt im Bereich von 30 bis 50 °C, umfasst, und/oder wobei das Aushärten in Verfahrensschritt e) durch Bestrahlen bei einer Temperatur T₂ im Bereich von 20 bis 90 °C, bevorzugt im Bereich von 30 bis 80 °C, besonders bevorzugt im Bereich von 40 bis 70 °C, erfolgt, und/oder wobei das Aushärten in Verfahrensschritt e) nach dem Bestrahlen ein Nachhärten bei einer Temperatur T₃ im Bereich von 60 bis 150 °C, bevorzugt im Bereich von 70 bis 140 °C, besonders bevorzugt im Bereich von 80 bis 130 °C, umfasst. Hierbei ist es besonders bevorzugt, wenn im erfindungsgemäßen Verfahren sämtliche der Temperaturen T₁, T₂ und T₃ entsprechend eingestellt werden.

Die Erfindung betrifft ebenfalls ein System zur Durchführung des erfindungsgemäßen Verfahrens, umfassend:
i) zumindest eine erfindungsgemäße Strahlungsvorrichtung, wobei die Strahlungsvorrichtung bevorzugt an einer automatisierten Bewegungsvorrichtung angeordnet ist, und
ii) eine Halteanordnung zur Aufnahme eines strangförmigen Elementes, sowie optional
ii) eine Umwicklungsvorrichtung, wobei die Umwicklungsvorrichtung dazu eingerichtet ist, ein strangförmiges Element mit einem Klebeband zu umwickeln.

Offenbart wird abschließend auch die Verwendung einer erfindungsgemäßen Strahlungsvorrichtung zur Aushärtung von aushärtbaren Klebemassen bei der Ummantelung von strangförmigen Elementen, insbesondere Kabelbäumen.

Nachfolgend werden bevorzugte Ausführungsformen der Erfindung unter Bezugnahme auf die beiliegenden Figuren näher erläutert und beschrieben. Dabei zeigen:
- Fig. 1: eine schematische Darstellung einer bevorzugten erfindungsgemäßen Strahlungsvorrichtung in einem geöffneten Zustand;
- Fig. 2: eine schematische Darstellung der bevorzugten erfindungsgemäßen Strahlungsvorrichtung der Fig.1 in einem geschlossenen Zustand;
- Fig. 3: eine schematische Darstellung einer bevorzugten erfindungsgemäßen Strahlungsvorrichtung bei der Durchführung eines Verfahrensschrittes des erfindungsgemäßen Verfahrens; und
- Fig. 4: eine schematische Darstellung des Einsatzes einer erfindungsgemäßen Strahlungsvorrichtung in einem erfindungsgemäßen Verfahren.

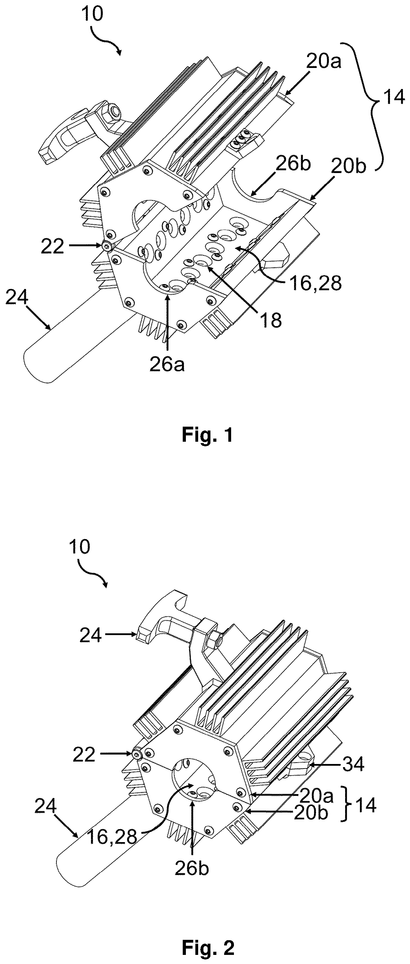

Fig. 1 zeigt eine erfindungsgemäße Strahlungsvorrichtung 10 zur Aushärtung von aushärtbaren Klebemassen bei der Ummantelung von strangförmigen Elementen 12, beispielsweise Kabelbäumen. Die Strahlungsvorrichtung 10 umfasst ein Gehäuse 14 mit zwei Gehäuseteilen 20a, 20b, welche gemeinsam einen länglichen Bestrahlungskanal 16 umschließen, der sich als gerade Ausnehmung durch das Gehäuse 14 erstreckt. Der Bestrahlungskanal 16 umfasst im gezeigten Beispiel eine Bestrahlungskammer 28, welche durch das Gehäuse 14 einerseits und die durch Verblendungselemente realisierten Seitenöffnungen 26a, 26b des Gehäuses 14 andererseits begrenzt wird, wie es insbesondere in Fig. 2 zu erkennen ist. Die Abmessungen der Seitenöffnungen 26a-b korrelieren dabei mit denen des Querschnitts der strangförmigen Elemente 12, für die die Strahlungsvorrichtung 10 ausgelegt ist.

Im Inneren der Bestrahlungskammer 28 ist eine Vielzahl von Strahlungsquellen 18 symmetrisch verteilt, nämlich in Reihen äquidistant zueinander angeordneter Strahlungsquellen 18, die an beiden Gehäuseteilen 20a-b angeordnet sind, sodass beide Gehäuseteile 20a-b mehrere parallel zur Längsrichtung der Bestrahlungskammer 28 bzw. des Bestrahlungskanals ausgerichtete Elementreihen aufweisen. Die Strahlungsquellen 18 sind im gezeigten Beispiel der Fig. 1 und 2 als LEDs ausgebildet und umfassen lediglich UV-Strahlungsquellen 18, die dazu eingerichtet sind, das Innere der Bestrahlungskammer 28 mit elektromagnetischer Strahlung im Wellenlängenbereich von 370 bis 400 nm zu bestrahlen, wobei bei der Aushärtung eine Temperierung des strangförmigen Materials 12 über die Abwärme der LEDs erfolgt.

Das Innere der Bestrahlungskammer 28 ist zusätzlich mit strahlungsreflektierenden Elementen versehen (nicht gezeigt), um eine besonders gleichmäßig Bestrahlung zu befördern.

Fig. 2 zeigt die Strahlungsvorrichtung der Fig. 1 im geschlossenen Zustand. Die Gehäuseteile 20a-b sind über einen als Klappmechanismus ausgebildeten Verbindungsmechanismus 22 beweglich miteinander verbunden, sodass ein reversibles und zerstörungsfreies Öffnen und Schließen des Gehäuses 14 durch eine Relativbewegung der Gehäuseteile 20a-b zueinander ermöglicht wird. Der Klappmechanismus ist federbelastet ausgebildet, sodass er im geöffneten Zustand des Gehäuses 14 ein Schließen des Gehäuses 14 befördert. Die Gehäuseteile 20a-b sind dabei hinsichtlich der Grundform als im Wesentlichen identische Halbschalen ausgeführt, welche jeweils das gleiche Innenvolumen aufweisen. Im geschlossenen Zustand können sie durch einen Verschlussmechanismus 34 in der geschlossenen Position fixiert werden. Zur manuellen Führung umfasst die Strahlungsvorrichtung 10 im gezeigten Beispiel einen am Gehäuse 14 befestigten Handgriff 24.

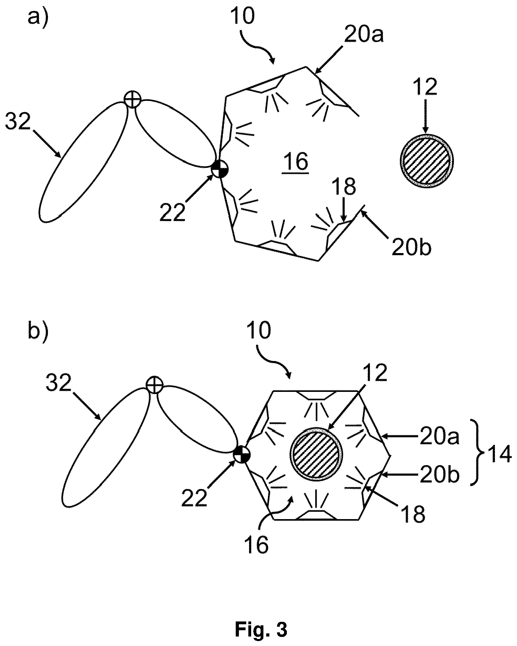

Fig. 3 visualisiert den Verfahrensschritt d) eines erfindungsgemäßes Verfahren zur Ummantelung von strangförmigen Elementen 12 in einer bevorzugten Ausführungsform, wobei das geöffnete Gehäuse 14 der Strahlungsvorrichtung 10 in Fig. 3 a) um ein strangförmiges Element 12 herum angeordnet wird und in Fig. 3 b) um dieses herum geschlossen wird, so dass das strangförmige Element 12 im länglichen Bestrahlungskanal 16 angeordnet ist und das Gehäuse 14 das strangförmige Element 12 in Umfangsrichtung umgibt. Im gezeigten Beispiel weist die Strahlungsvorrichtung 10 eine automatisierte Bewegungsvorrichtung 32 auf, die als Roboterarm ausgebildet ist.

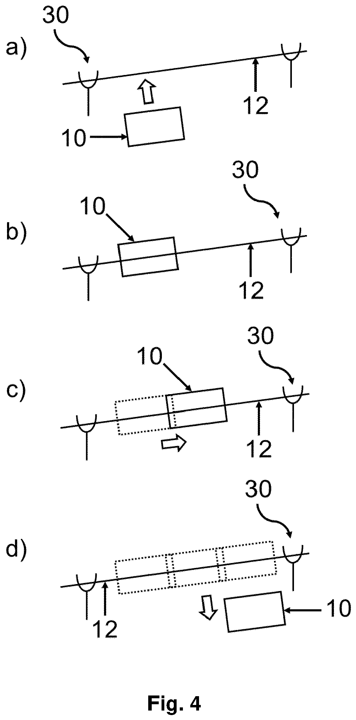

Fig. 4 visualisiert schematisch weitere Verfahrensschritte des erfindungsgemäßen Verfahrens zur Ummantelung von strangförmigen Elementen 12. Das mit aushärtbarem Klebeband umwickelte strangförmige Element 12 ist hierfür in einer Halteanordnung 30 zur Einstellung einer vorbestimmten Form und zum Erhalt eines geformten Strangs angeordnet, wie in Fig. 4 a) gezeigt. Die Strahlungsvorrichtung 10 wird um einen Teilabschnitt des strangförmigen Elements 12 herum angeordnet und, wie in Fig. 4b) angedeutet, geschlossen, so dass das strangförmige Element 12 im länglichen Bestrahlungskanal 16 der Strahlungsvorrichtung 10 angeordnet ist und das Gehäuse 14 es abschnittsweise in Umfangsrichtung umgibt.

Nach erfolgtem Aushärten der aushärtbaren Klebemasse des strangförmigen Elements 12 durch Bestrahlen desselben mit elektromagnetischer Strahlung mittels der Strahlungsquellen 18 der Strahlungsvorrichtung 10, wird im von der Strahlungsvorrichtung umgebenen Abschnitt des strangförmigen Elements 12 ein ummantelter Strang erhalten. Durch ein Führen der Strahlungsvorrichtung 10 mit dem geschlossenen Gehäuse 14 entlang des geformten Strangs, wird sukzessive in mehreren Abschnitten ein ummantelter Strang erhalten, wie es in Fig. 4c) und 4d) gezeigt ist. Im Anschluss kann die Strahlungsvorrichtung 10 vom ummantelten Strang entfernt werden.

### Bezugszeichenliste

- 10: Strahlungsvorrichtung
- 12: Strangförmiges Element
- 14: Gehäuse
- 16: Bestrahlungskanal
- 18: Strahlungsquellen
- 20a,b: Gehäuseteil
- 22: Verbindungsmechanismus
- 24: Handgriff
- 26a,b: Seitenöffnung
- 28: Bestrahlungskammer
- 30: Halteanordnung
- 32: Bewegungsvorrichtung
- 34: Verschlussmechanismus

## Patentansprüche

1. Strahlungsvorrichtung (10) zur Aushärtung von aushärtbaren Klebemassen bei der Ummantelung von strangförmigen Elementen (12), umfassend ein Gehäuse (14) mit einem durch das Gehäuse (14) verlaufenden länglichen Bestrahlungskanal (16),
wobei die Strahlungsvorrichtung (10) eine Vielzahl von Strahlungsquellen (18) umfasst, die dazu eingerichtet sind, das Innere des länglichen Bestrahlungskanals (16) mit elektromagnetischer Strahlung zu bestrahlen,
wobei das Gehäuse (14) zumindest zwei Gehäuseteile (20a, 20b) umfasst, wobei die Gehäuseteile (20a, 20b) über einen Verbindungsmechanismus (22) beweglich miteinander verbunden sind, wobei der Verbindungsmechanismus (22) dazu eingerichtet ist, ein reversibles und zerstörungsfreies Öffnen und Schließen des Gehäuses (14) durch eine Relativbewegung der Gehäuseteile (20a, 20b) zueinander zu ermöglichen,
wobei die Strahlungsvorrichtung (10) dazu eingerichtet ist, dass das geöffnete Gehäuse (14) um ein strangförmiges Element (12) herum angeordnet und um dieses herum geschlossen werden kann, so dass das strangförmige Element (12) im länglichen Bestrahlungskanal (16) angeordnet ist und das Gehäuse (14) das strangförmige Element (12) abschnittsweise in Umfangsrichtung zumindest teilweise umgibt.

2. Strahlungsvorrichtung (10) nach Anspruch 1, wobei die Strahlungsvorrichtung (10) als Strahlungsquellen (18) UV-Strahlungsquellen umfasst, und/oder wobei die Strahlungsvorrichtung (10) als Strahlungsquellen (18) IR-Strahlungsquellen umfasst.

3. Strahlungsvorrichtung (10) nach einem der Ansprüche 1 oder 2, wobei die Strahlungsquellen (18) so angeordnet sind, dass sie bei geschlossenem Gehäuse (14) zu der Oberfläche eines im Bestrahlungskanal (16) angeordneten strangförmigen Elements (12) einen mittleren Abstand im Bereich von 5 bis 200 mm aufweisen.

4. Strahlungsvorrichtung (10) nach einem der Ansprüche 1 bis 3, wobei die Strahlungsvorrichtung (10) einen Handgriff (24) zur manuellen Führung der Strahlungsvorrichtung (10) umfasst.

5. Strahlungsvorrichtung (10) nach einem der Ansprüche 1 bis 4, wobei die Strahlungsvorrichtung (10) eine Befestigungsvorrichtung zur Befestigung der Strahlungsvorrichtung (10) an einer automatisierten Bewegungsvorrichtung (32) umfasst.

6. Strahlungsvorrichtung (10) nach einem der Ansprüche 1 bis 5, wobei die Querschnittsfläche des länglichen Bestrahlungskanals (16) quer zur Längsrichtung im Bereich einer oder beider Seitenöffnungen (26a, 26b) gegenüber der Querschnittsfläche im Inneren verringert ist, so dass der Bestrahlungskanal (16) im Inneren des Gehäuses eine Bestrahlungskammer (28) umfasst

7. Verfahren zur Ummantelung von strangförmigen Elementen (12) mit einer Strahlungsvorrichtung (10) nach einem der Ansprüche 1 bis 6, umfassend die Verfahrensschritte:
a) Herstellen oder Bereitstellen eines strangförmigen Elementes (12),
b) Umwickeln des strangförmigen Elementes (12) mit einem Klebeband zum Erhalt eines umwickelten Strangs, wobei das Klebeband als aushärtbare Klebemasse eine strahlungshärtende und/oder thermisch härtende Klebemasse umfasst,
c) Anordnen des umwickelten Strangs in einer Halteanordnung (30) zur Einstellung einer vorbestimmten Form und zum Erhalt eines geformten Strangs,
d) Öffnen des Gehäuses (14) der Strahlungsvorrichtung (10), Anordnen des geöffneten Gehäuses (14) um den geformten Strang und Schließen des Gehäuses (14), so dass der geformte Strang im länglichen Bestrahlungskanal (16) angeordnet ist und das Gehäuse (14) den geformten Strang abschnittsweise in Umfangsrichtung zumindest teilweise umgibt, und
e) Aushärten der aushärtbaren Klebemasse im geformten Strang durch Bestrahlen des Klebebandes mit elektromagnetischer Strahlung der Wellenlänge λ mittels der Strahlungsquellen (18) der Strahlungsvorrichtung (10) zum Erhalt eines ummantelten Strangs.

8. Verfahren nach Anspruch 7, zusätzlich umfassend den Verfahrensschritt:
f) Führen der Strahlungsvorrichtung (10) mit dem geschlossenen Gehäuse (14) entlang des geformten Strangs, zum Aushärten der aushärtbaren Klebemasse in unterschiedlichen Abschnitten des geformten Strangs.

9. Verfahren nach einem der Ansprüche 7 oder 8, wobei das Führen der Strahlungsvorrichtung (10) so erfolgt, dass jeder durch die Strahlungsvorrichtung (10) geführte Bereich des geformten Strangs eine Strahlungsdosis im Bereich von 4 bis 14 J/cm² erfährt.

10. Verfahren nach einem der Ansprüche 7 bis 9, wobei das Aushärten in Verfahrensschritt e) vor dem Bestrahlen ein Vorwärmen des geformten Strangs bei einer Temperatur T1 im Bereich von 20 bis 60 °C umfasst, und/oder wobei das Aushärten in Verfahrensschritt e) bei einer Temperatur T2 im Bereich von 20 bis 90 °C erfolgt, und/oder wobei das Aushärten in Verfahrensschritt e) nach dem Bestrahlen ein Nachhärten bei einer Temperatur T3 im Bereich von 60 bis 150 °C umfasst.

11. System zur Durchführung des Verfahrens nach einem der Ansprüche 7 bis 10, umfassend:
i) zumindest eine Strahlungsvorrichtung (10) nach einem der Ansprüche 1 bis 6, und
ii) eine Halteanordnung (30) zur Aufnahme eines strangförmigen Elementes, sowie optional
ii) eine Umwicklungsvorrichtung, wobei die Umwicklungsvorrichtung dazu eingerichtet ist, ein strangförmiges Element mit einem Klebeband zu umwickeln.
